# EUROPEAN PATENT APPLICATION

(11) **EP 3 312 089 A1**
(43) Date of publication of application: **25.04.2018**
(21) Application number: 17197213.6
(22) Date of filing: 19.10.2017
(51) Int. Cl.: B64D 11/06

(54) **SEAT BACK SHROUD COMPRISING SUPPORT FOR READING MATERIAL AND PED**

(30) Priority: 21.10.2016 GB 201617873
(71) Applicant: Acro Aircraft Seating Limited, Crawley, West Sussex RH11 0PR (GB)
(72) Inventor: HUGH, Toby, Crawley, West Sussex RH11 0PR (GB); CHALLENOR, Adam, Crawley, West Sussex RH11 0PR (GB)
(74) Representative: Sweetinburgh, Mark Roger

(57) **Abstract**

Described herein is a seat attachment for covering at least part of a seat back. The seat attachment comprises a body for positioning against a seat back and a support removably attached to said body and/or removably attachable to said seat back. The support is for supporting literature between said support and said seat back.

## Description

The present invention relates to a seat attachment in particular to a seat back attachment for an aircraft seat.

Various seat back attachments, commonly referred to as seat back "shrouds", are provided on the back of aircraft seats. Such shrouds are often in the form of a plastic moulding and provide the seat back with a clean, aesthetically pleasing appearance. They may be provided over all of the seat back or just a part of the seat back, for example an upper part of the seat back.

It is known for seat back shrouds to include a holder for a personal electronic device (PED), such as a tablet computer, a pocket for literature and/or a securing means for securing a tray table in a stowed configuration against the shroud and/or seat back.

As the complexity of seat back shrouds increases, so does their specificity for a particular use. For example, a shroud will typically be provided with a PED holder for holding a PED of a certain size, thus making the holder unsuitable for other sized devices. In addition, the provision of a PED holder may make the provision of other accessories, such as a literature pocket, problematic.

It is, therefore, an object of the present invention to seek to alleviate the above identified problems.

### SUMMARY OF THE INVENTION

According to a first aspect of the present invention, there is provided a seat attachment for covering at least part of a seat back, the seat attachment comprising a body for positioning against a seat back and a support removably attached to said body and/or removably attachable to said seat back, wherein the support is for supporting literature between said support and said seat back.

Preferably, the support comprises a panel.

Preferably, the support comprises a holder for a personal electronic device (PED).

Preferably, support comprises a holder for a tablet computer or a mobile phone.

Preferably, the holder is a PED holder.

The seat attachment of the present invention is particularly advantageous because it allows the provision of a different support on the seat back without replacement of the entire seat attachment. For example, if the seat attachment is originally provided with a holder for a PED of one size and it is later desired to have a seat attachment with a holder for a PED of a different size, only the support requires replacement. In addition, if a support which is only for supporting literature is originally provided and it is desired to include a holder for a PED, the support can be replaced with a different support comprising a holder for a PED without replacing the entire seat attachment.

In addition, in the event that no holder or support is required, the support can simply be removed. This could, for example, be particularly advantageous in the event that an entertainment screen is desired in the seat back. This could, for example, be provided instead of a removable support.

Preferably, the support is a rigid support.

Preferably, the support is a flexible support.

Preferably, the support comprises a flexible panel.

Preferably, the support comprises an elastic material.

Preferably, the body comprises a recess for receiving literature.

Preferably, the body comprises a cavity for receiving literature.

Preferably, the seat attachment is a shroud or a cover.

Preferably, the seat attachment comprises a securing means for securing a tray table in a stowed position against the seat attachment and/or seat back of a seat.

Preferably, the securing means comprises a latch, for example a lever positionable over the tray table.

Preferably, the seat attachment comprises a receiving means for receiving a tray table in a stowed position against the seat attachment and/or seat back of a seat.

Preferably, the seat attachment is shaped to receive a tray table in a stowed position against the seat attachment and/or seat back of a seat.

Preferably, the seat attachment comprises a recess for receiving a tray table in a stowed position against the seat attachment and/or seat back of a seat.

Preferably, the body comprises one or more first mating parts for engagement with one or more second mating parts on the support.

Preferably, the one or more first mating parts comprise a female mating part and the one or more second mating parts comprise a male mating part.

Alternatively, the one or more first mating parts comprise a male mating part and the one or more second mating parts comprise a female mating part.

Preferably, the one or more female mating parts comprise a recess.

Preferably, the body comprises one or more recesses for receiving the support.

Preferably, the body comprises one or more removable inserts for positioning within the recesses.

Preferably, the one or more inserts are for securing the support within the recesses.

Preferably, the one or more inserts are for sandwiching the support between said inserts and the seat back.

Alternatively, the one or more inserts are positionable within the recesses and are for connecting the support to the body.

Preferably, the support is removably secured to the body from a seat back facing surface of the seat attachment. This is particularly advantageous because, whilst it allows the support to be changed by a maintenance engineer, it prevents removal of the support by a passenger during normal use.

Preferably, the support is removably secured to the body by one or more screws or bolts.

Preferably, the one or more screws or bolts are hidden from view between the seat attachment and the seat back when the seat attachment is secured to the back of a seat.

Preferably, the support comprises one or more straps, preferably elastic straps.

Preferably, the support comprises one or more bungees.

Preferably, the support comprises a pair of straps.

Preferably, the body comprises one or more guides for positioning the support across the body.

Preferably, the one or more guides comprise one or more grooves or recesses.

Preferably, the body comprises an aperture and the support is positioned across the aperture when attached to the body.

Preferably, the body comprises an aperture and the support is positioned within the aperture when attached to the body.

Preferably, the seat attachment is for covering at least part of a vehicle seat back, preferably an aircraft seat back.

Preferably, the body comprises a first body part for attachment to a seat back and a second body part removably attached to the first body part and/or removably attachable to the seat back.

Preferably, the support is removably attached to the second body part.

Preferably, the support comprises a first support part removably attached to the body and/or removably attachable to the seat back, and a second support part removably attached to the first support part and/or the body and/or removably attachable to the seat back.

Preferably, the second support part comprises a holder for a PED.

Preferably, the first support part is for supporting literature between said first support part and said seat back.

According to another aspect of the present invention, there is provided a seat attachment for covering at least part of a seat back, the seat attachment comprising a body for positioning against a seat back, wherein the body comprises a first body part for attachment to a seat back and a second body part removably attached to the first body part and/or removably attachable to the seat back, wherein (i) said second body part comprises a support removably attached to said second body part and/or removably attachable to said seat back, wherein the support is for supporting literature between said support and said seat back, and/or (ii) said second body part is configured for holding an electronic display.

In accordance with the first aspect of the present invention, in one embodiment, the support is removably attached to the body. As such, according to an aspect of the present invention, there is provided a seat attachment for covering at least part of a seat back, the seat attachment comprising a body for positioning against a seat back and a support removably attached to said body, wherein the support is for supporting literature between said support and said seat back.

In another embodiment, the support is removably attachable to the seat back. As such, according to an aspect of the present invention, there is provided a seat attachment for covering at least part of a seat back, the seat attachment comprising a body for positioning against a seat back and a support removably attachable to said seat back, wherein the support is for supporting literature between said support and said seat back.

In a further embodiment, the support is removably attached to the body and removably attachable to the seat back. As such, according to an aspect of the present invention, there is provided a seat attachment for covering at least part of a seat back, the seat attachment comprising a body for positioning against a seat back and a support removably attached to said body and removably attachable to said seat back, wherein the support is for supporting literature between said support and said seat back.

According to another aspect of the present invention, there is provided a kit comprising a seat attachment as described herein and one or more additional supports as described herein for attachment to said body.

Preferably, one or more of said supports comprises a holder for a PED.

Preferably, the kit comprises a support without a holder for a PED and one or more supports comprising a holder for a PED.

Preferably, the kit comprises a support without a holder for a PED and two or more supports with a holder for a PED, wherein at least one of said supports comprises a holder for a PED of a first size and at least another of said supports comprises a holder for a PED of a second size.

Preferably, the body comprises one or more, preferably a pair, of recesses for receiving the support and the kit comprises one or more removable inserts for positioning within the one or more recesses. In this way, in the event that the seat attachment is provided without the support, the one or more recesses can be hidden from view.

According to another aspect of the present invention, there is provided a seat comprising a seat attachment as described herein.

Preferably, the seat comprises a seat back and the body is attached to the seat back.

Preferably, the support is removably attached to said body.

Preferably, the seat comprises a seat back and the support is removably attached to said seat back.

Preferably, the seat comprises a seat back and the support is removably attached to said body and said seat back.

Preferably, the seat is a vehicle seat, preferably an aircraft seat.

According to a further aspect of the present invention, there is provided a row of seats as described herein.

It will be appreciated that reference to "one or more" includes reference to "a plurality".

Within this specification, reference to a personal electronic device (PED) includes reference to a tablet computer and/or a mobile phone.

Within this specification, reference to literature includes reference to magazines and/or aircraft information leaflets.

Within this specification embodiments have been described in a way which enables a clear and concise specification to be written, but it is intended and will be appreciated that embodiments may be variously combined or separated without parting from the invention. For example, it will be appreciated that all preferred features described herein are applicable to all aspects of the invention described herein and vice versa.

### DETAILED DESCRIPTION

Example embodiments of the present invention will now be described with reference to the accompanying Figures, in which
Figures 1A to 1D show views of a seat attachment with a rigid support having a holder for a PED;
Figures 2A to 2D show views of the seat attachment of Figures 1A to 1D in which the support has been replaced with a rigid support without a holder for a PED;
Figures 3A to 3G show views of a base adapted for receiving a support in the form of bungee ropes;
Figure 3G shows the base of Figures 3A to 3F with bungee ropes in situ;
Figure 4 shows the provision of blank inserts within a body described herein;
Figures 5A to 5G show views of a base adapted for receiving a support in the form of a flexible panel;
Figure 5G shows the base of Figures 5A to 5F with a flexible panel in situ;
Figures 6A to 6D show further views of the base shown in Figures 1A to 2D;
Figure 6E shows an example of a base for a seat attachment with inserts for receiving a support;
Figure 7 shows a row of aircraft seats to which seat attachments have been affixed
Figures 8A to 8C show views of a seat attachment in which the base and support are modular;
Figures 9A to 9C show views of the seat attachment of Figures 8A to 8C in which an upper part of the base has been replaced by a different upper part;
Figures 10A to 10C show views of a seat attachment having a different shaped support; and;
Figures 11A to 11C show an embodiment of the present invention wherein the support is attached to the seat back. Figure 11B shows a cut-away view of the seat attachment and Figure 11C shows the position of connectors on a seat back.

The present invention relates to a seat attachment for positioning on the back of a seat, in particular of an aircraft seat.

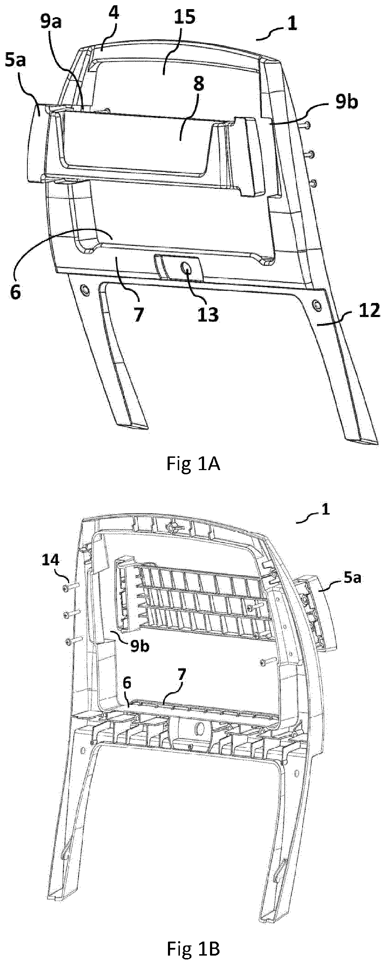

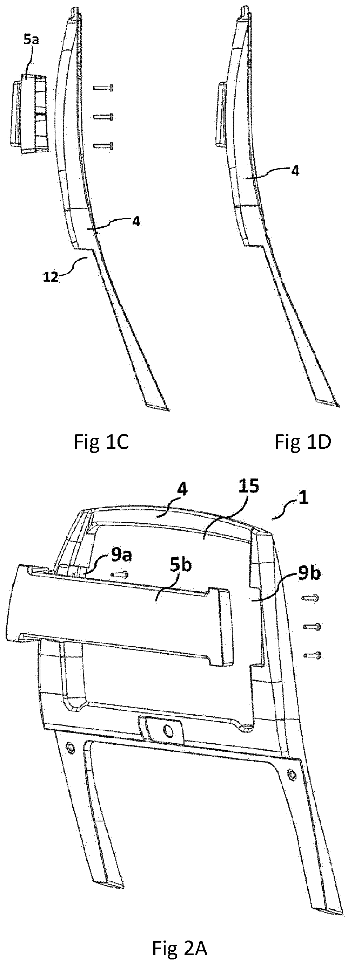

With reference to Figures 1A to 1D, 6A to 6D and Figure 7 a seat attachment 1 is provided for positioning on a seat back 2 of a seat 3. The seat attachment 1 comprises a body 4 for positioning against the seat back 2 and a rigid support 5a which is removably attached to the body 4. The support 5a is for supporting literature (not shown), such as magazines or aircraft information leaflets, between the support 5a and the seat back 2. As will be appreciated, a space is provided between the support 5a and the seat back 2 for accommodating literature. In order to hold the literature in position, the body 4 includes a recess 6 formed by a lip 7. As such, a pocket for literature is formed by the support 5a, the seat back 2 and the body/recess/lip 4, 6, 7.

The support 5a is received into a pair of recesses 9a, 9b in the sides of the seat attachment 1. The recesses 9a, 9b form female mating parts for engagement with the ends of the support 5a.

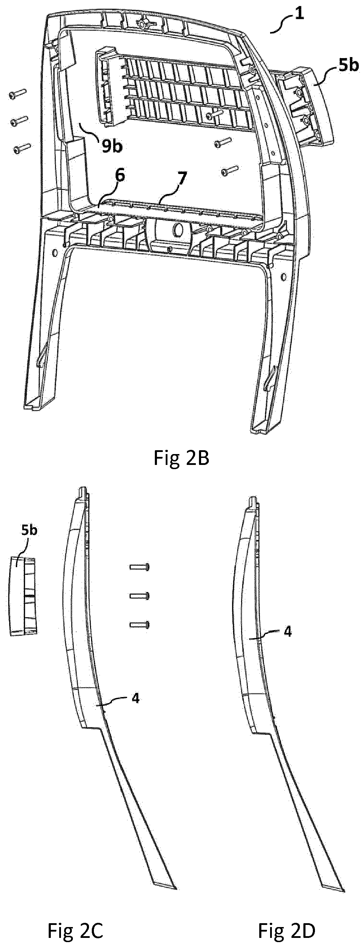

In the example shown in Figures 1A to 1D, the support 5a takes the form of a rigid panel 5a with a holder 8 for a PED. However, in the event that a holder is not required, the panel 5a can be replaced with a different panel 5b which lacks a holder. This is shown in Figures 2A to 2D.

The support 5a is removably secured to the body 4 from a seat back facing side of the seat attachment 1 by a plurality of screws 14. This is particularly advantageous because, whilst it allows the support 5a to be changed by a maintenance engineer, it prevents removal of the support 5a by a passenger during normal use. It also means that the screws 14 are hidden from view between the seat attachment 1 and the seat back 2 when the seat attachment 1 is secured to the back of a seat.

The body 4 comprises an aperture 15 and the support 5a is positioned across the aperture 15 when attached to the body 4.

As described above, the seat attachment 1 of the present invention is particularly advantageous because it allows the provision of a different support 5a, 5b without replacement of the entire seat attachment 1. For example, and in addition to the example discussed above, if the seat attachment 1 is originally provided with a holder 8 for a PED of one size and it is later desired to have a seat attachment with a holder 8 for a PED of a different size, only the support 5a requires replacement.

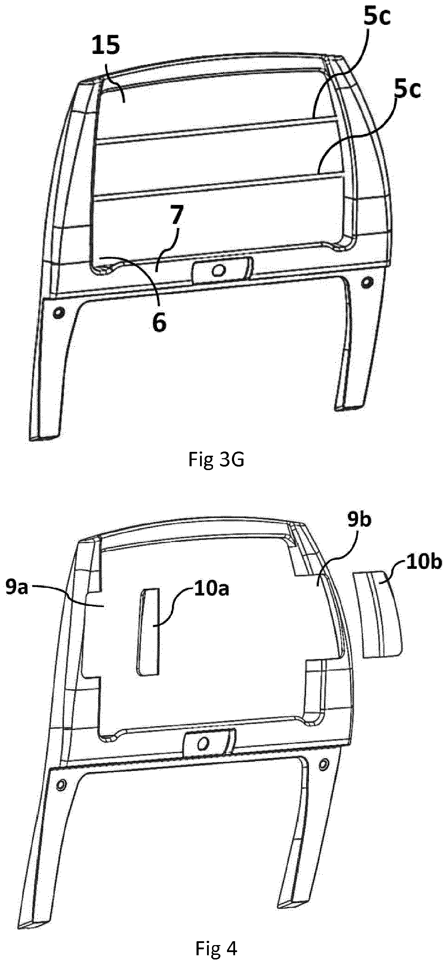

In addition, in the event that no holder 8 or support is required, the support 5a, 5b can simply be removed. This could, for example, be particularly advantageous in the event that an entertainment screen (not shown) is desired in the seat back 2. An example of this is shown with reference to Figure 4 where blank inserts 10a, 10b are inserted into the recesses 9a, 9b.

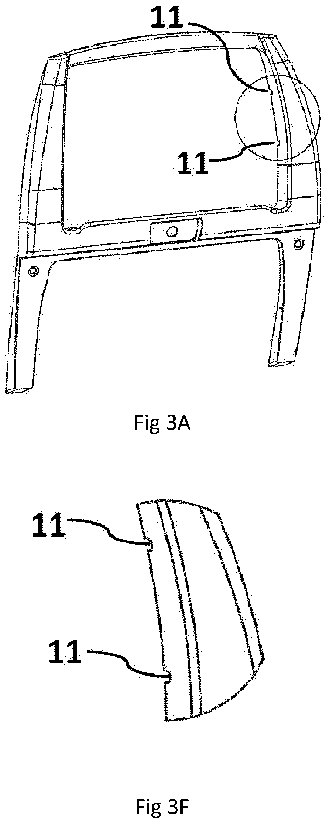

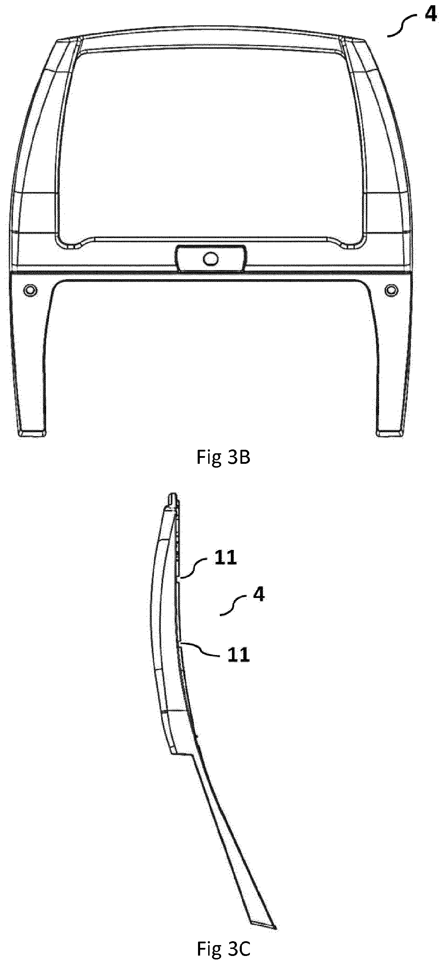

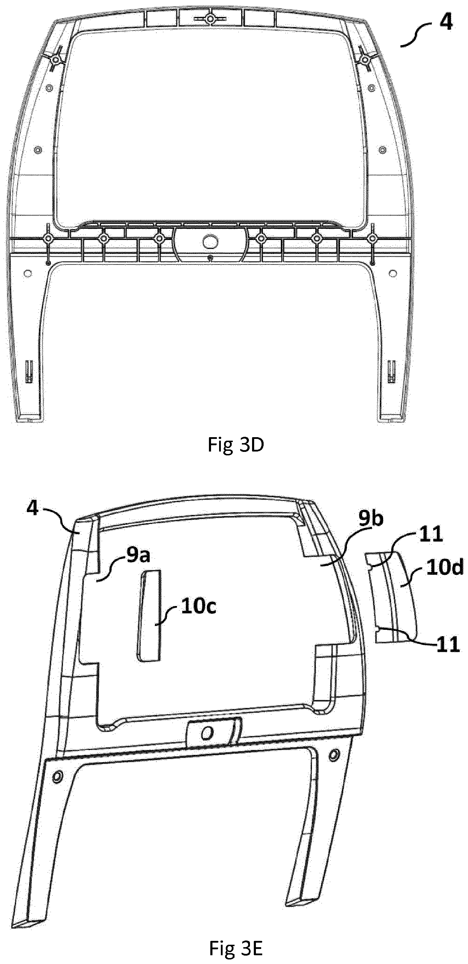

With reference to Figures 3A to 3G, in the event that a holder 8 is not required, a flexible support 5c can be provided. In the example shown, the flexible support is provided by bungee rope 5c.

As shown in Figures 3A to 3D, 3F and 3G, the body 4 includes grooves 11 in its seat back facing surface into which the bungee rope 5c can be positioned. In effect, the bungee is sandwiched between the body 4 and the seat back 2. As with the other examples of support, 5a, 5b, the bungee 5c spans across an aperture 15 formed in the body and, in combination with the recess 6 and front lip 7, forms a pocket for literature.

In the example shown in Figures 3A to 3D, 3F and 3G, the grooves 11 are formed in the body 4; however, as an alternative, and as shown in Figure 3E, inserts 10c, 10d, can be provided with grooves 11 for insertion into the recesses 9a, 9b of the body 4. This is particularly advantageous because it allows the body 4 shown in Figures 1A to 2D to also be used with a flexible support such as the bungee of Figures 3A to 3G.

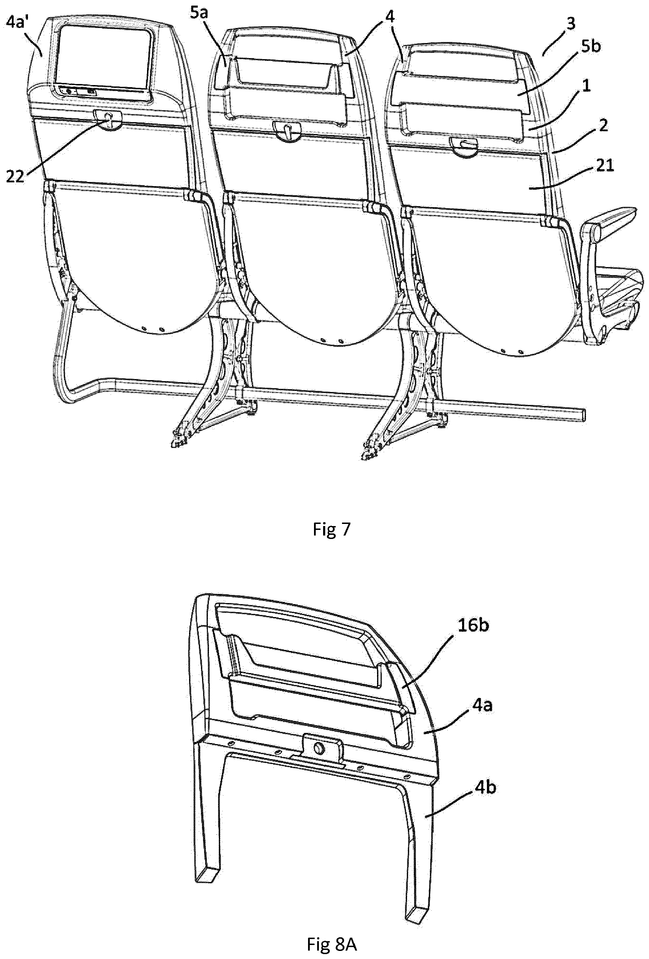

The seat attachment 1 is shaped with the provision of a recess 12 to receive a tray table (21, as shown in Figure 7) in a stowed position against the seat attachment 1 and seat back 2 of the seat. In order to hold a tray table in a stowed position, the seat attachment can be provided with a latch/lever (22, as shown in Figure 7) positionable over the tray table. It will be appreciated that the lever can be provided via the aperture 13.

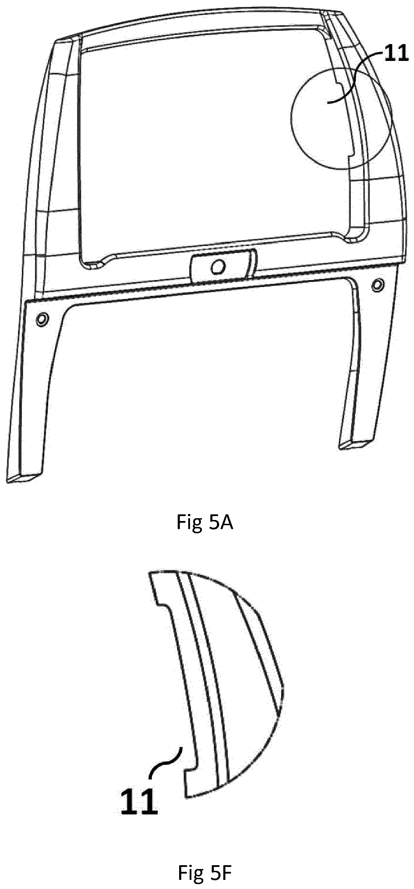

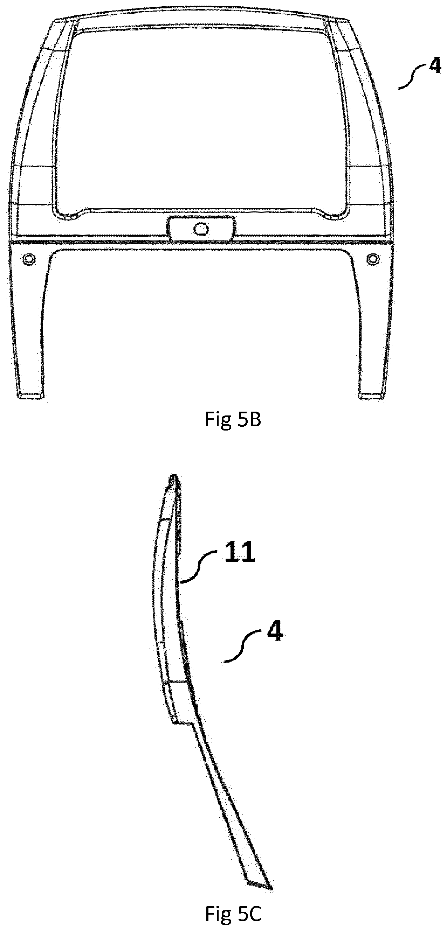

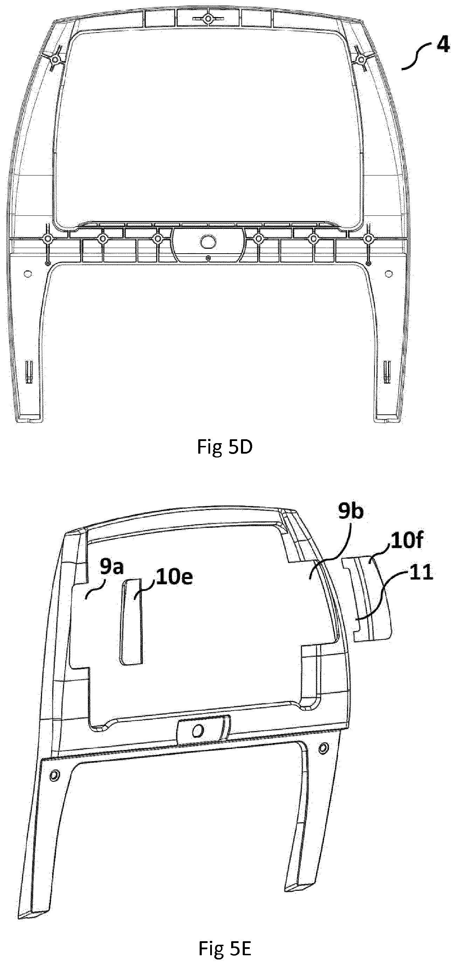

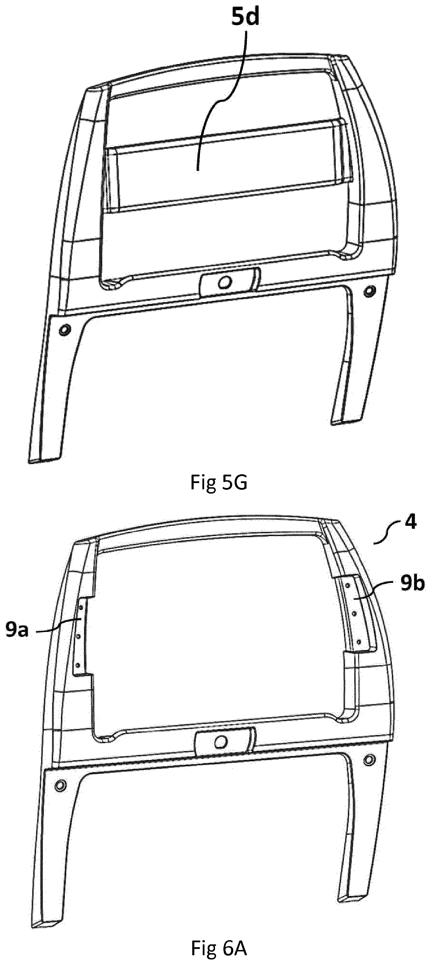

With reference to Figures 5A to 5D, 5F and 5G the grooves 11 may be elongate grooves or recesses 11 for receiving a flexible panel 5d instead of a bungee. As such, instead of a pair of grooves on each side of the body 4, a single elongate groove 11 is provided on each side of the body.

As with the example shown in Figure 3E, and as shown in Figure 5E, removable inserts 10e, 10f, can be provided but with an elongate groove 11 for insertion into the recesses 9a, 9b of the body 4.

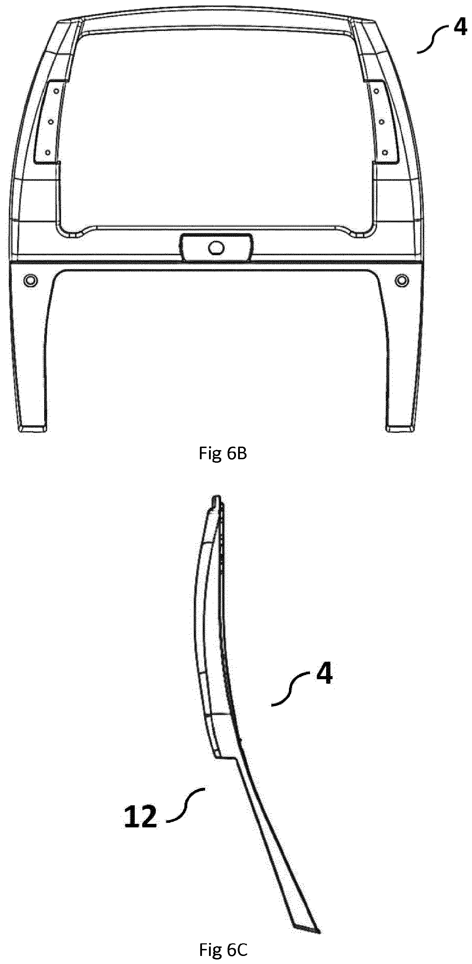

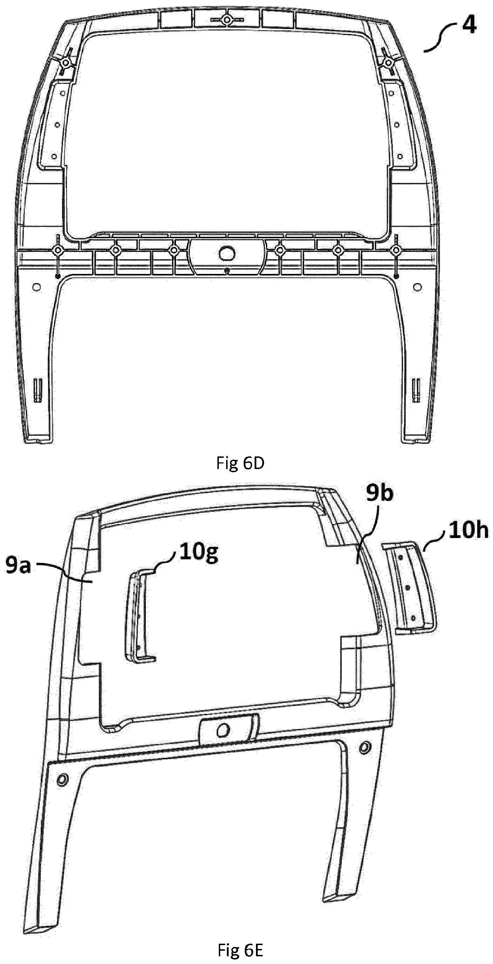

Whilst the removable inserts 10c, 10d, 10e and 10f are for sandwiching a support 5c, 5d, between the body 4 and the seat back 2, with reference to Figure 6E, removable inserts 10g, 10h can be provided within recesses 9a, 9b for receiving a support 5a, 5b.

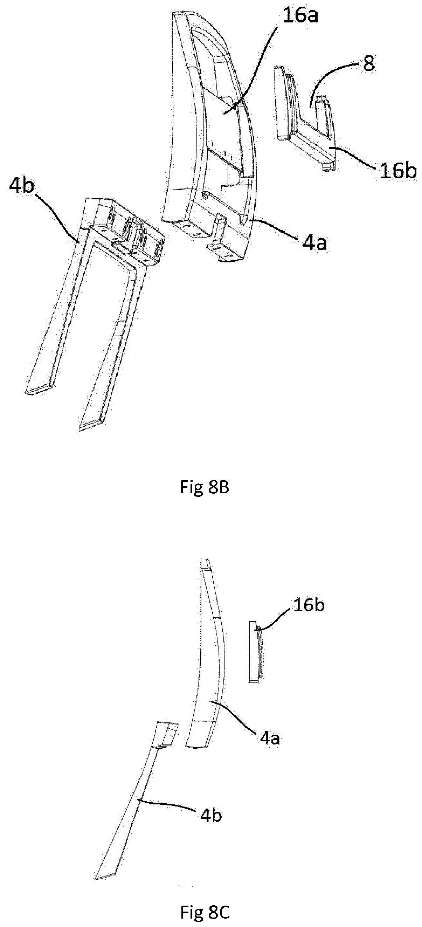

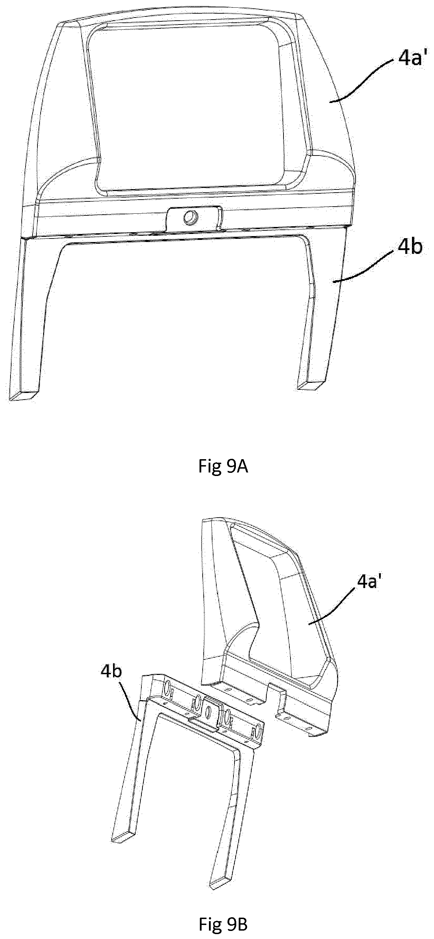

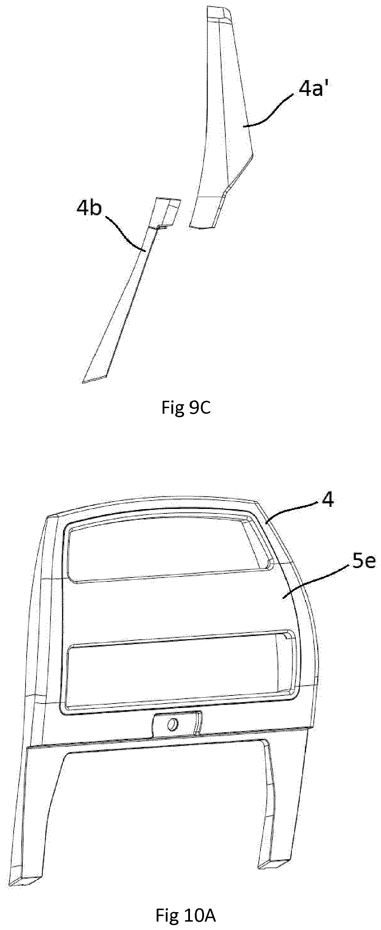

With reference to Figures 8A to 8C, the body 4 can be provided in a modular form with upper 4a and lower 4b parts. In the example shown, the lower part 4b can be attached to the seat back 2 which allows the upper part 4a to be replaced with an alternative upper part 4a. An example of this is with reference to Figures 9A to 9C which show the modular seat attachment of Figures 8A to 8C with a different upper part 4a' configured to receive an electronic display (not shown).

With regard to the modular upper part 4a shown in Figures 8A to 8C, a modular support 5 is provided. In the example shown, the modular support includes first 16a and second 16b parts. The first part 16a acts as a base support for supporting literature between itself and the seat back 3. The second part 16b includes a holder 8 for a PED. Alternatively, it will be appreciated that the second part 16b could be provided in a form without a holder 8 for a PED.

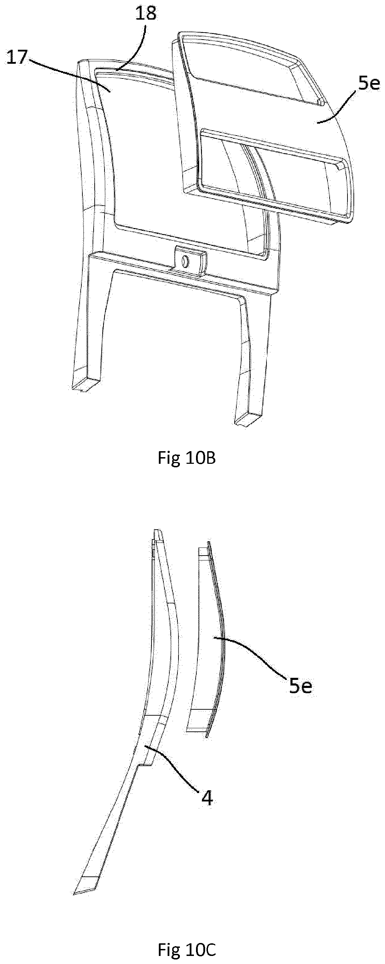

With reference to Figures 10A to 10C, an example of the present invention is shown in which the support 5e is shaped to fit within an aperture 17 of the body 4. Rather than being provided with a pair of recesses 9a, 9b for receiving an elongate support 5a, the support 5e is received within a recess 18 positioned around the aperture 17.

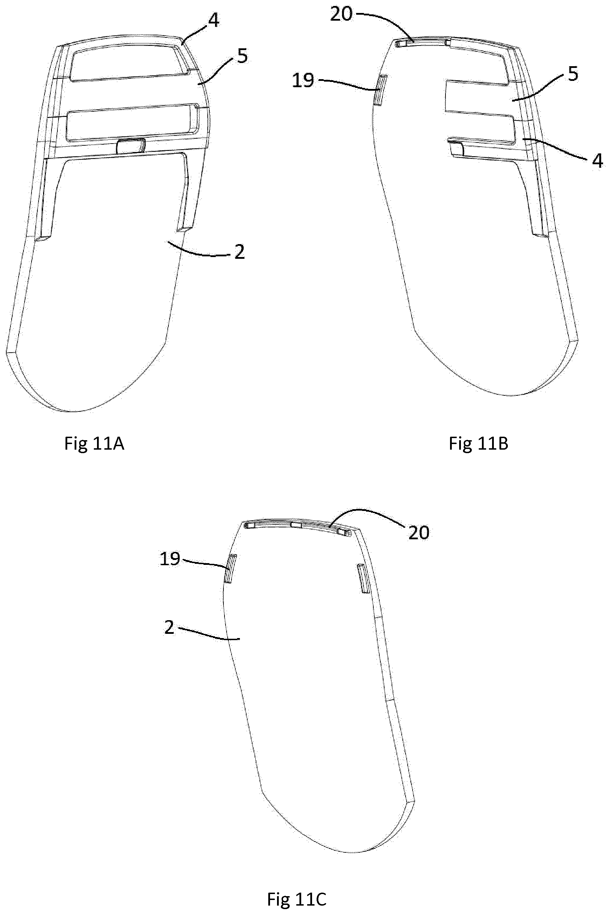

With reference to Figures 11A to 11C, an example of the present invention is shown in which the support 5 and base 4 are removably attached to the seat back 2 by connectors 19, 20. This is particular advantageous when it is desired to provide additional structural support to the seat attachment 1 and, in particular, the support 5. It will also be appreciated that the support 5 could be removably attached to both the base 4 and the seat back 2.

The present invention includes the following embodiments.
1. A seat attachment for covering at least part of a seat back, the seat attachment comprising a body for positioning against a seat back and a support removably attached to said body and/or removably attachable to said seat back, wherein the support is for supporting literature between said support and said seat back.
2. A seat attachment according to embodiment 1, wherein the support comprises a panel.
3. A seat attachment according to embodiment 1 or 2, wherein the support comprises a holder for a personal electronic device (PED).
4. A seat attachment according to any preceding embodiment, wherein the support is a rigid support.
5. A seat attachment according to any of embodiments 1 to 3, wherein the support is a flexible support.
6. A seat attachment according to embodiment 5, wherein the support comprises a flexible panel.
7. A seat attachment according to any preceding embodiment, wherein the body comprises a recess for receiving literature.
8. A seat attachment according to any preceding embodiment, wherein the body comprises a cavity for receiving literature.
9. A seat attachment according to any preceding embodiment, wherein the body comprises one or more first mating parts for engagement with one or more second mating parts on the support.
10. A seat attachment according to any preceding embodiment, wherein the body comprises one or more recesses for receiving the support.
11. A seat attachment according to embodiment 10, wherein the body comprises one or more removable inserts for positioning within the recesses.
12. A seat attachment according to embodiment 11, wherein the one or more inserts are for securing the support within the recesses.
13. A seat attachment according to embodiment 11 or 12, wherein the one or more inserts are for sandwiching the support between said inserts and a seat back.
14. A seat attachment according embodiment 11 or 12, wherein the one or more inserts are positionable within the recesses and are for connecting the support to the body.
15. A seat attachment according to any preceding embodiment, wherein the support is removably secured to the body from a seat back facing surface of the seat attachment.
16. A seat attachment according to any preceding embodiment, wherein the support is removably secured to the body by one or more screws or bolts.
17. A seat attachment according to embodiment 16, wherein the one or more screws or bolts are hidden from view between the seat attachment and the seat back when the seat attachment is secured to the back of a seat.
18. A seat attachment according to any preceding embodiment, wherein the body comprises one or more guides for positioning the support across the body.
19. A seat attachment according to embodiment 18, wherein the one or more guides comprise one or more grooves or recesses.
20. A seat attachment according to any preceding embodiment, wherein the body comprises an aperture and the support is positioned across the aperture when attached to the body.
21. A seat attachment according to any preceding embodiment, wherein the seat attachment is for covering at least part of a vehicle seat back, preferably an aircraft seat back.
22. A seat attachment according to any preceding embodiment, wherein the body comprises a first body part for attachment to a seat back and a second body part removably attached to the first body part and/or removably attachable to the seat back.
23. A seat attachment according to embodiment 22, wherein the support is removably attached to the second body part.
24. A seat attachment according to any preceding embodiment, wherein the support comprises a first support part removably attached to the body and/or removably attachable to the seat back, and a second support part removably attached to the first support part and/or the body and/or removably attachable to the seat back.
25. A seat attachment according to embodiment 24, wherein the second support part comprises a holder for a PED.
26. A seat attachment according to embodiment 25, wherein the first support part is for supporting literature between said first support part and said seat back.
27. A seat attachment for covering at least part of a seat back, the seat attachment comprising a body for positioning against a seat back, wherein the body comprises a first body part for attachment to a seat back and a second body part removably attached to the first body part and/or removably attachable to the seat back, wherein (i) said second body part comprises a support removably attached to said second body part and/or removably attachable to said seat back, wherein the support is for supporting literature between said support and said seat back, and/or (ii) said second body part is configured for holding an electronic display.
28. A kit comprising a seat attachment according to any preceding embodiment and one or more additional supports as described in any preceding embodiment for attachment to said body.
29. A kit according to embodiment 28, wherein one or more of said supports comprises a holder for a PED.
30. A kit according to embodiment 28 or 29, wherein the kit comprises a support without a holder for a PED and one or more supports comprising a holder for a PED.
31. A kit according to any of embodiments 28 to 30, wherein the kit comprises a support without a holder for a PED and two or more supports with a holder for a PED, wherein at least one of said supports comprises a holder for a PED of a first size and at least another of said supports comprises a holder for a PED of a second size.
32. A kit according to any of embodiments 28 to 31, wherein the body comprises one or more recesses for receiving a support and the kit comprises one or more removable inserts for positioning within the one or more recesses.
33. A seat comprising a seat attachment according to any of embodiments 1 to 27.
34. A seat according to embodiment 33, wherein the seat is a vehicle seat, preferably an aircraft seat.
35. A row of seats according to embodiment 33 or 34.

It should be understood that various changes and modifications to the presently preferred embodiments described herein will be apparent to those skilled in the art. Such changes and modifications can be made without departing from the spirit and scope of the present invention and without diminishing its attendant advantages. It is therefore intended that such changes and modifications are covered by the appended claims.

## Claims

1. A seat attachment for covering at least part of a seat back, the seat attachment comprising a body for positioning against a seat back and a support removably attached to said body and/or removably attachable to said seat back, wherein the support is for supporting literature between said support and said seat back.

2. A seat attachment according to claim 1, wherein
(i) the support comprises a panel and/or a holder for a personal electronic device (PED); and/or
(ii) the support is a rigid support or a flexible support, optionally wherein the support comprises a flexible panel; and/or
(iii) the body comprises a recess for receiving literature, and/or
(iv) the body comprises a cavity for receiving literature; and/or
(v) the body comprises one or more first mating parts for engagement with one or more second mating parts on the support; and/or
(vi) the support is removably secured to the body from a seat back facing surface of the seat attachment; and/or
(vii) the support is removably secured to the body by one or more screws or bolts, optionally wherein the one or more screws or bolts are hidden from view between the seat attachment and the seat back when the seat attachment is secured to the back of a seat, and/or
(viii) the body comprises an aperture and the support is positioned across the aperture when attached to the body; and/or
(ix) the seat attachment is for covering at least part of a vehicle seat back, preferably an aircraft seat back; and/or
(x) the body comprises a first body part for attachment to a seat back and a second body part removably attached to the first body part and/or removably attachable to the seat back, optionally wherein the support is removably attached to the second body part; and/or
(xi) the support comprises a first support part removably attached to the body and/or removably attachable to the seat back, and a second support part removably attached to the first support part and/or the body and/or removably attachable to the seat back, optionally wherein the second support part comprises a holder for a PED, optionally wherein the first support part is for supporting literature between said first support part and said seat back.

3. A seat attachment according to claim 1 or 2, wherein the body comprises one or more recesses for receiving the support.

4. A seat attachment according to claim 3, wherein the body comprises one or more removable inserts for positioning within the recesses.

5. A seat attachment according to claim 4, wherein the one or more inserts are for securing the support within the recesses.

6. A seat attachment according to claim 4 or 5, wherein the one or more inserts are for sandwiching the support between said inserts and a seat back.

7. A seat attachment according claim 4 or 5, wherein the one or more inserts are positionable within the recesses and are for connecting the support to the body.

8. A seat attachment according to any preceding claim, wherein the body comprises one or more guides for positioning the support across the body.

9. A seat attachment according to claim 8, wherein the one or more guides comprise one or more grooves or recesses.

10. A seat attachment for covering at least part of a seat back, the seat attachment comprising a body for positioning against a seat back, wherein the body comprises a first body part for attachment to a seat back and a second body part removably attached to the first body part and/or removably attachable to the seat back, wherein (i) said second body part comprises a support removably attached to said second body part and/or removably attachable to said seat back, wherein the support is for supporting literature between said support and said seat back, and/or (ii) said second body part is configured for holding an electronic display.

11. A kit comprising a seat attachment according to any preceding claim and one or more additional supports as described in any preceding claim for attachment to said body.

12. A kit according to claim 11, wherein one or more of said supports comprises a holder for a PED, and/or wherein the kit comprises a support without a holder for a PED and one or more supports comprising a holder for a PED, and/or wherein the kit comprises a support without a holder for a PED and two or more supports with a holder for a PED, wherein at least one of said supports comprises a holder for a PED of a first size and at least another of said supports comprises a holder for a PED of a second size.

13. A kit according to claim 11 or 12, wherein the body comprises one or more recesses for receiving a support and the kit comprises one or more removable inserts for positioning within the one or more recesses.

14. A seat comprising a seat attachment according to any of claims 1 to 10, optionally wherein the seat is a vehicle seat, preferably an aircraft seat.

15. A row of seats according to claim 14.
